# EUROPEAN PATENT APPLICATION

(11) **EP 4 491 017 A1**
(43) Date of publication of application: **15.01.2025**
(21) Application number: 23780374.7
(22) Date of filing: 27.03.2023
(51) Int. Cl.: A01M 1/04, A01M 1/14

(54) **INSECT TRAP**

(30) Priority: 30.03.2022 JP 2022056277
(71) Applicant: Pest Vision Solutions Co., Ltd., Takatsuki-shi, Osaka 569-1133 (JP)
(72) Inventor: KATAYAMA, Junichiro, Takatsuki-shi, Osaka 569-1133 (JP); KAWATAKE, Yuji, Takatsuki-shi, Osaka 569-1133 (JP); TANOE, Takafumi, Takatsuki-shi, Osaka 569-1133 (JP); KAMEMOTO, Tatsuya, Takatsuki-shi, Osaka 569-1133 (JP); TAKETSU, Kazusuke, Takatsuki-shi, Osaka 569-1133 (JP); ITO, Masato, Takatsuki-shi, Osaka 569-1133 (JP); BABA, Yosuke, Takarazuka-shi, Hyogo 665-0051 (JP)
(74) Representative: Grosse, Felix Christopher
(86) International application number: PCT/JP2023/012250
(87) International publication number: WO 2023/190364

(57) **Abstract**

Provided is an insect trap including: a collecting part having a space therein for collecting an insect to be captured; an attracting part for generating an attracting medium for attracting the insect into the collecting part; and a capturing part for capturing the insect inside the collecting part. The collecting part has an inlet through which the insect passes into the collecting part, and the inlet has: an opening for communication between inside and outside the collecting part; and a closing part that partially closes the opening and configured to allow the attracting medium to pass therethrough from the inside of the collecting part to the outside of the collecting part.

## Description

### CROSS-REFERENCE TO RELATED APPLICATION

This application claims priority to Japanese Patent Application No. 2022-056277, the disclosure of which is incorporated herein by reference in its entirety.

### FIELD

The present invention relates to an insect trap for capturing flying insects.

### BACKGROUND

Known as the insect trap is, for example, an insect trapping apparatus including: a housing having an opening on a front side; a light source mounted inside the housing and configured to emit light for attracting insects; and an insect trapping adhesive sheet disposed inside the housing (see, for example, Patent Literature 1).

The above insect trapping apparatus is configured to allow an insect attracted to light from the light source to enter the housing through the opening and come into contact with the insect trapping adhesive sheet, so that the insect is captured by the insect trapping adhesive sheet.

The known insect trapping apparatus as above preferably has a large opening to allow insects to easily enter the housing, but the insect trapping apparatus with such a large opening sometimes fails to capture insects since some of those insects inside the housing come out of the housing through the opening without coming into contact with the insect trapping adhesive sheet.

### CITATION LIST

### Patent Literature

Patent Literature 1: JP 2021-093965 A

### SUMMARY

### Technical Problem

In view of such circumstances, therefore, it is an object of the present invention to provide an insect trap capable of improving its insect trapping performance.

### Solution to Problem

An insect trap of the present invention includes: a collecting part having a space therein for collecting an insect to be captured; an attracting part for generating an attracting medium for attracting the insect into the collecting part; and a capturing part for capturing the insect inside the collecting part, in which the collecting part has an inlet through which the insect passes into the collecting part, and the inlet has: an opening for communication between inside and outside of the collecting part; and a closing part that partially closes the opening and configured to allow the attracting medium to pass therethrough from the inside of the collecting part to the outside of the collecting part.

The insect trap of the present invention can be configured such that the attracting part is configured to emit light as the attracting medium, and the closing part is configured to be light transmissive.

The insect trap of the present invention can be configured such that the closing part closes at least a part of an outer peripheral area of the opening and opens a central part of the opening.

The insect trap of the present invention can be configured such that the collecting part has a circulating route starting from the inlet.

The insect trap of the present invention can be configured such that the collecting part has a tubular shape, and the inlet is formed in a tubular surface of the collecting part.

The insect trap of the present invention can be configured such that the attracting part is disposed in a central part of the collecting part, and the circulating route is formed of a space around the attracting part among the space in the collecting part.

The insect trap of the present invention can be configured such that the capturing part is disposed at a lower part of the collecting part.

The insect trap of the present invention can further include a guide part disposed around the capturing part in the collecting part, in which the guide part has an inclined surface inclined from above to below as it becomes closer to the capturing part.

### BRIEF DESCRIPTION OF DRAWINGS

Fig. 1 is a front view of an insect trap according to an embodiment of the present invention.
Fig. 2 is a left side view of the insect trap according to the embodiment.
Fig. 3 is a right side view of the insect trap according to the embodiment.
Fig. 4 is a cross-sectional view taken along line IV-IV of Fig. 2.
Fig. 5 is a cross-sectional view taken along line V-V of Fig. 2.
Fig. 6 is an explanatory view of an internal structure of the insect trap according to the embodiment.
Fig. 7 is an explanatory view of a state of use of the insect trap according to the embodiment.

### DESCRIPTION OF EMBODIMENTS

Hereinafter, a description will be given on an insect trap according to an embodiment of the present invention with reference to the accompanying drawings. The insect trap according to this embodiment is for capturing flying insects.

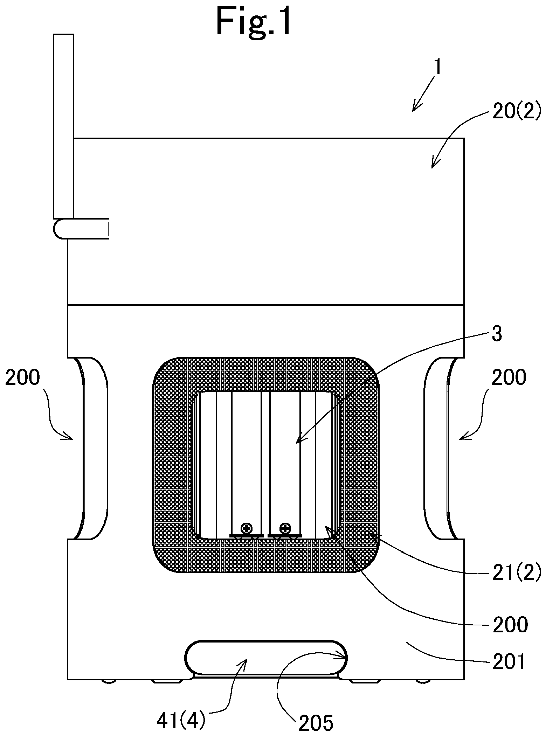

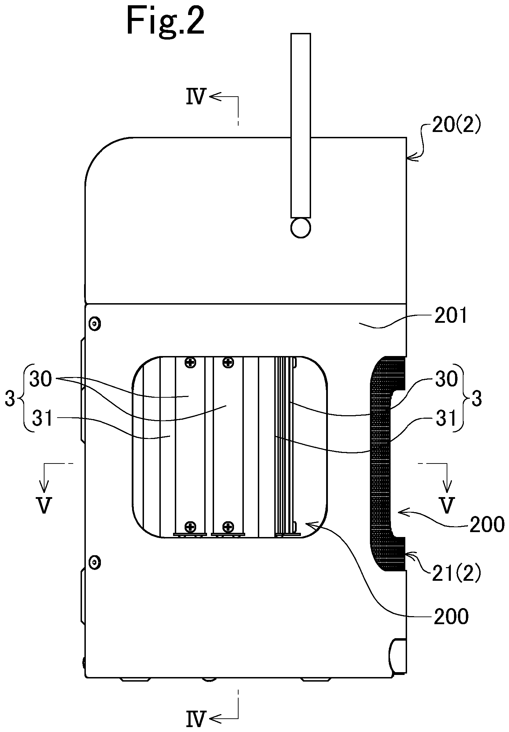

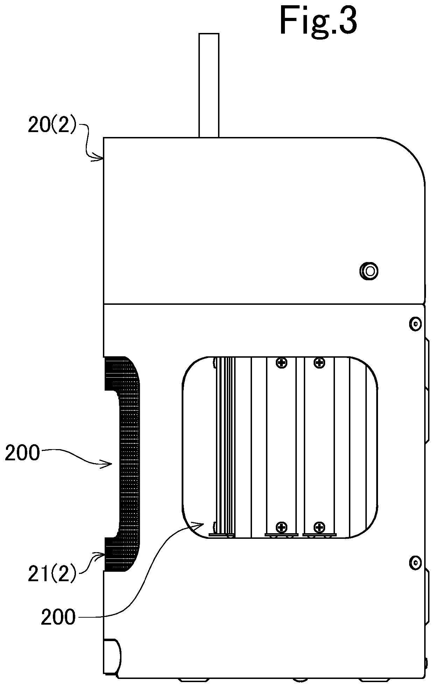

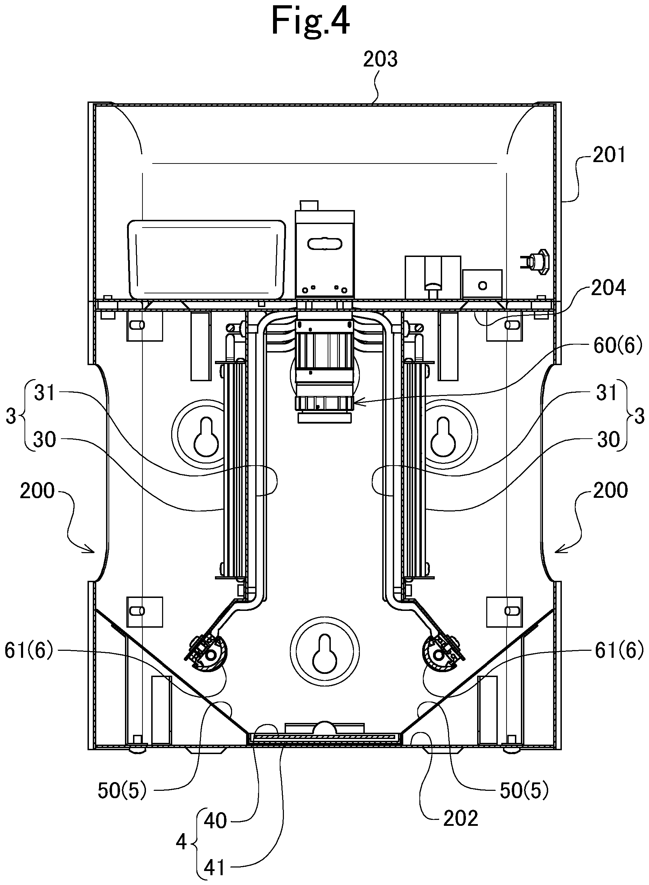

An insect trap 1 includes, as shown in Fig. 1 to Fig. 3, a collecting part 2 having a space therein for collecting an insect to be captured; and an attracting part 3 for generating an attraction medium for attracting the insect into the collecting part 2, and further includes, as shown in Fig. 4, a capturing part 4 for capturing the insect inside the collecting part 2; a guide part 5 for guiding the insect to the capturing part 4; and an imaging unit 6 for taking an image of the insect captured by the capturing part 4.

The collecting part 2 includes a housing 20 having a space therein and configured to communicate between inside and outside of the collecting part 2, and a closing part 21 for partially closing an opening 200 of the housing 20 (see Fig. 1 to Fig. 3). The opening 200 and the closing part 21 together form an inlet through which the insect passes into the housing 20.

The housing 20 includes a tubular body part 201, a bottom part 202 for closing one open end in an axial direction of the tubular body part 201, a top part 203 for closing an other open end in the axial direction of the tubular body part 201, and a partition 204 for partitioning a space in the body part 201 into a space on a side of the bottom part 202 and a space on a side of the top part 203.

The opening 200 of the housing 20 is formed in the body part 201. The body part 201 has a plurality of the openings 200. In this embodiment, the openings 200 are formed in three locations, namely: a front side, a left side, and a right side, of the body part 201. The openings 200 are thus formed in a tubular surface of the collecting part 2 (housing 20).

As shown in Fig. 1, the closing part 21 is formed to partially close the opening 200. The closing part 21 of this embodiment closes the entire peripheral part of the opening 200. Accordingly, the opening 200 has a central part open out of the entire opening area.

The attracting part 3 of this embodiment is configured to emit light (attracting light) as the attracting medium.

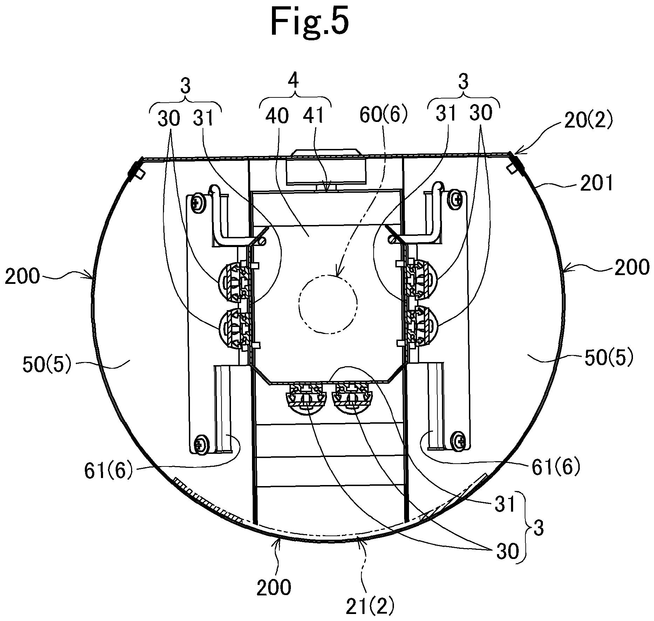

More specifically, as shown in Fig. 5, the attracting part 3 includes a light source 30 for emitting attracting light, and a base 31 mounted inside the housing 20 and configured to allow the light source 30 to be attached thereto.

In the housing 20 of this embodiment, three attracting parts 3 are disposed in conformity to the number of openings 200. The three attracting parts 3 are disposed respectively at a position opposed to the opening 200 on the front side, a position opposed to the opening on the left side, and a position opposed to the opening 200 on the right side.

The light source 30 can be, for example, a light emitting diode or a fluorescent lamp.

The closing part 21 is configured to allow the attracting medium generated by the attracting part 3 to pass therethrough from the inside to the outside of the housing 2. Since the attracting part 3 of this embodiment is configured to emit attracting light as the attracting medium, the closing part 21 is made of a mesh. Thus, the closing part 21 is configured to allow the attracting medium to pass therethrough from the inside to the outside of the housing 20 while blocking insects inside the housing 20 from coming out of the housing 20.

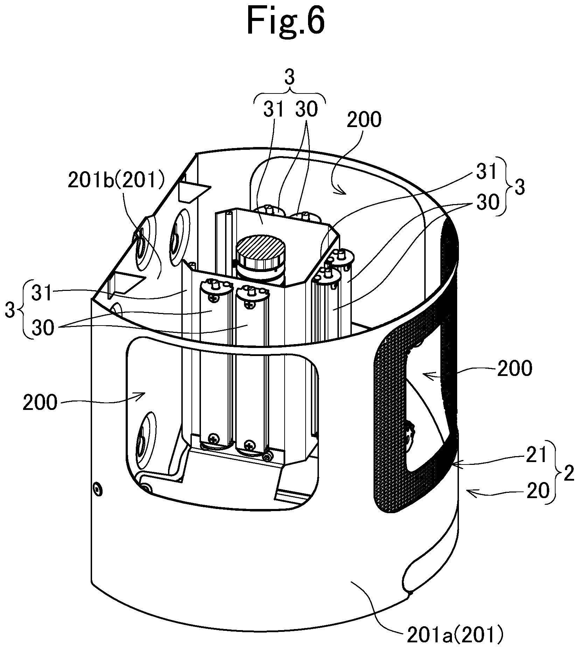

The base 31 is configured to hang from the partition 204 on a central part side in the housing 20. The base 31 is disposed at a position away from both a back part 201a of the body part 201 and a front part 201b of the body part 201 (see Fig. 6). This configuration forms a continuous space (circulating route) over the entire periphery in the peripheral direction of the housing 20 about the three attracting parts 3, between the three attracting parts 3 and an inner surface of the body part 201.

The capturing part 4 includes an insect trapping paper 40 having adhesiveness, and a tray 41 disposed on the bottom part 202 of the housing 20 for placing the insect trapping paper 40 thereon.

The tray 41 is configured to be capable of being put into and out of the housing 20. The tray 41 of this embodiment is configured to be capable of being put into and out of the housing 20 through a slot 205 (see Fig. 1) formed in the body part 201.

The guide part 5 is disposed around the capturing part 4. The guide part 5 of this embodiment includes an end part (referred to as outer end part) in contact with the inner surface of the body part 201, and an end part (referred to as inner end part) located at a position adjacent to the capturing part 4 (tray 41).

As shown in Fig. 4, the guide part 5 includes an inclined surface 50 inclined to have the inner end part located lower than the outer end part.

The inclined surface 50 has the outer end part located outside and higher than the light source 30, and the inner end part located inside and lower than the light source 30. The inclined surface 50 has its central part between the outer end part and the inner end part passing below the light source 30.

In the guide part 5 of this embodiment, the inclined surface 50 is formed on each of one side and the other side in a width direction of the capturing part 4.

The imaging unit 6 includes an imaging apparatus 60 configured to take an image of the insect trapping paper 40 from above, and an illumination apparatus 61 for illuminating the insect trapping paper 40 with light.

The imaging apparatus 60 is disposed in the central part of the housing 20 (closer to the central side of the housing 20 than the three bases 31). The imaging apparatus 60 is fixed to the partition 204 in a state of facing downward (i.e., state where its imaging direction is directed to the insect trapping paper).

The imaging unit 6 of this embodiment includes a plurality of (two) illumination apparatuses 61, which are disposed at positions symmetrical to each other about the insect trapping paper 40.

Each of the illumination apparatuses 61 is disposed above and outside the insect trapping paper 40, and is disposed to have its optical axis directed to the insect trapping paper 40. This configuration allows the insect trapping paper 40 to be illuminated with light by the illumination apparatuses 61 from diagonally above on both sides.

The length between the illumination apparatuses 61 is preferably set to be equal to or greater than the length of the insect trapping paper 40.

The configuration of the insect trap 1 according to this embodiment has been described as above. Next, a description will be given on a use state of the insect trap 1.

The attracting light emitted from each of the light sources 30 travels out through an opening area of the opposed one of the openings 200. The opening 200 on the front side has the closing part 21 closing the entire outer periphery of the opening 200, and the closing part 21 is configured to allow the attracting light to pass therethrough from the inside to the outside of the housing 20. Thus, the attracting light emitted from the light source 30 travels from the inside to the outside of the housing 20 through the entire area of the opening 200.

The insect attracted to the attracting light of the light source 30 enters the housing 20 through the opening area of the opening 200.

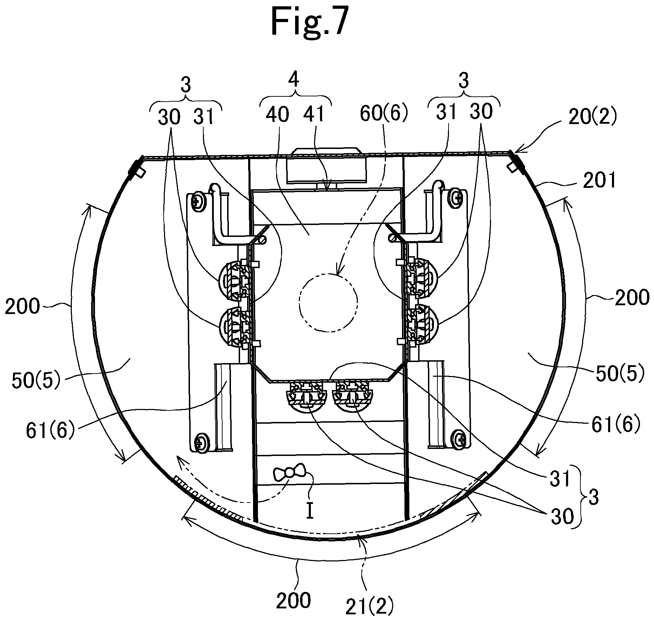

Inside the housing 20, an insect (I) flying toward the outside of the housing 20 can be blocked by the closing part 21 to be thereby easily kept inside the housing 20 (see Fig. 7).

The space in the housing 20 serves as the circulating route continuous over the entire periphery in the peripheral direction of the housing 20 about the three attracting parts 3. This configuration allows the insect inside the housing 20 to keep flying along the circulating route and fall onto the insect trapping paper 40 or the inclined surface 50 of the guide part 5 when it runs out of energy.

The insect that has fallen directly onto the insect trapping paper 40 is directly captured by the insect trapping paper 40. The insect that has fallen onto the inclined surface 50 of the guide part 5 slides down the inclined surface 50 to fall onto the insect trapping paper 40. The insect in the housing 20 is thus captured by falling onto the insect trapping paper 40.

Then, the imaging apparatus 60 is used to take an image of the insect captured by the insect trapping paper 40.

Since the insect trapping paper 40 of this embodiment is illuminated with light from above and outside the insect trapping paper 40 by the two illuminating apparatuses 61 disposed symmetrical to each other about the insect trapping paper 40, the insect hardly casts a shadow on the insect trapping paper 40. This allows a clear image of the insect in a good condition to be obtained.

Thus, the insect trap 1 of this embodiment can improve its insect capturing rate, and can further obtain a clear image of the insect captured in a good condition.

As described above, in the insect trap 1 according to this embodiment, the closing part 21 partially closing the opening 200 as the inlet of insects is also configured to allow the attracting light as the attracting medium to pass therethrough from the inside to the outside of the housing 20. This configuration allows the attracting medium to travel from the inside to the outside of the housing 20 through the closing part 21 while those insects flying toward the outside of the housing 20 are blocked by the closing part 21.

Accordingly, the insect trap 1 enables insects to be kept in the housing 20 without degrading an insect attracting effect by the attracting medium, thereby being able to produce an excellent effect of the improved insect trapping performance.

Since the closing part 21 is configured to have the outer peripheral part of the opening 200 closed but have the central part of the opening 200 open, the opening central part of the opening 200 enables insects to easily enter the housing 20 through the opening 200, and the closed outer peripheral area of the opening 200 can easily block those insects attempting to come out of the housing 20.

Further, the insect trapping paper 40 of the capturing part 4 is disposed at the lower part of the housing 20 in the insect trap 1 of this embodiment. This configuration enables those insects having fallen as a result of exhaustion after flying in the housing 20 to fall onto the insect trapping paper for capturing.

Further, the configuration that the space in the housing 20 is the circulating route formed to circulate starting from the opening 200 enables the insects in the housing 20 to easily keep flying.

The housing 20 formed in a tubular shape to have a curved inner wall (inner wall of the housing 20) has a fewer internal angular parts formed in the housing 20. This configuration reduces locations where insects tend to stay, thereby forcing the insects to keep flying.

Further, the circulating route in the housing 20 is a continuous space over the entire periphery in the peripheral direction about the attracting parts 3. This configuration enables the insects in the housing 20 to keep flying while applying an attracting action of the attracting parts 3 to the insects.

As has been described above, the insect trap 1 of this embodiment is configured to enable the insects in the housing 20 to easily keep flying to thereby make the insects stay within the housing 20 and efficiently make the insects in the housing 20 run out of energy. This configuration enables the insects to be efficiently captured.

Disposed around the insect trapping paper 40 is the guide part having the inclined surface 50 inclined from above to below as it becomes closer to the insect trapping paper 40, which enables those insects having fallen around the capturing part 4 to be collected by the guide part to the capturing part 4. This configuration can also increase the insect capturing efficiency of the capturing part 4.

It is a matter of course that the insect trap according to the present invention is not limited to the aforementioned embodiment, and various modifications can be made without departing from the gist of the present invention.

The aforementioned embodiment has been described by taking, for example, the case where the insect trap 1 has an insect trapping function of capturing an insect with the insect trapping paper 40 and also an imaging function of taking an image of the insect captured by the insect trapping paper 40, without limitation thereto. For example, the configuration can be such that, among the insect trapping function and the imaging function, the insect trap 1 has the insect trapping function only, or has an inspecting function of inspecting the obtained image of the insect, in addition to the insect trapping function and the imaging function.

In such a case, the insect trap 1 can include, for example, an inspecting apparatus configured to inspect the image taken by the imaging unit. The inspecting apparatus can be incorporated in the insect trap 1, or can be configured to enable information communication with the insect trap 1 via wired or wireless communication.

The aforementioned embodiment has been described by taking, for example, the case where the collecting part 2 has the three openings 200, without limitation thereto. For example, the configuration can be such that the collecting part 2 has one or two openings 200, or has four or more openings 200.

The aforementioned embodiment has been described by taking, for example, the case where one of the three openings 200 has the closing part 21, but the configuration can also be such that all of the three openings 200 have the respective closing parts 21, or two out of the three openings 200 have the respective closing parts 21. That is, in the case where the collecting part 2 has the openings 200, the configuration can be such that at least one of the openings 200 has the closing part 21.

The aforementioned embodiment has been described by taking, for example, the case where the closing part 21 closes the entire outer peripheral part of the opening 200, without limitation thereto. For example, the configuration can be such that the closing part 21 is formed to partially close the outer peripheral part of the opening 200, or is formed to close the central part of the opening 200 and open the outer peripheral part of the opening 200.

The aforementioned embodiment has been described by taking, for example, the case where the attracting part 3 is configured to emit light as the attracting medium, without limitation thereto. For example, the configuration can be such that the attracting part 3 generates a smell or sound as the attracting medium.

The aforementioned embodiment has been described by taking, for example, the case where the closing part 21 is made of a mesh to be thereby light transmissive, but for example, the closing part 21 can be made of a material other than a mesh as long as the material is transparent.

However, if the attracting part 3 generates a sound or smell as the attracting medium, the closing part 21 is preferably made of a mesh.

### REFERENCE SIGNS LIST

1: Insect trap
2: Collecting part
3: Attracting part
4: Capturing part
5: Guide part
6: Imaging unit
20: Housing
21: Closing part
30: Light source
31: Base
40: Insect trapping paper
41: Tray
50: Inclined surface
60: Imaging apparatus
61: Illumination apparatus
200: Opening
201: Body part
201a: Back part
201b: Front part
202: Bottom part
203: Top part
204: Partition
205: Slot

## Claims

1. An insect trap comprising:
a collecting part having a space therein for collecting an insect to be captured;
an attracting part for generating an attracting medium for attracting the insect into the collecting part; and
a capturing part for capturing the insect inside the collecting part, wherein
the collecting part has an inlet through which the insect passes into the collecting part, and
the inlet has:
an opening for communication between inside and outside of the collecting part; and
a closing part that partially closes the opening and configured to allow the attracting medium to pass therethrough from the inside of the collecting part to the outside of the collecting part.

2. The insect trap according to claim 1, wherein
the attracting part is configured to emit light as the attracting medium, and
the closing part is configured to be light transmissive.

3. The insect trap according to claim 1 or 2, wherein
the closing part closes at least a part of an outer peripheral area of the opening and opens a central part of the opening.

4. The insect trap according to any one of claim 1 to claim 3, wherein
the collecting part has a circulating route starting from the inlet.

5. The insect trap according to any one of claim 1 to claim 4, wherein
the collecting part has a tubular shape, and
the inlet is formed in a tubular surface of the collecting part.

6. The insect trap according to claim 4, wherein
the attracting part is disposed in a central part of the collecting part, and
the circulating route is formed of a space around the attracting part among the space in the collecting part.

7. The insect trap according to any one of claim 1 to claim 6, wherein
the capturing part is disposed at a lower part of the collecting part.

8. The insect trap according to claim 7, further comprising a guide part disposed around the capturing part in the collecting part, wherein
the guide part has an inclined surface inclined from above to below as it becomes closer to the capturing part.
